# EUROPÄISCHE PATENTSCHRIFT

(11) **EP 3 293 239 B1**
(45) Veröffentlichungstag und Bekanntmachung des Hinweises auf die Patenterteilung: **11.11.2020**
(21) Anmeldenummer: 17190062.4
(22) Anmeldetag: 08.09.2017
(51) Int. Cl.: C09J 7/26, C09J 5/00, F16K 99/00, B01L 3/00, C09J 7/29

(54) **KLEBEELEMENT UND VENTILANORDNUNG**
ADHESIVE ELEMENT AND VALVE ASSEMBLY
ÉLÉMENT ADHÉSIF ET ENSEMBLE DE SOUPAPE

(30) Priorität: 09.09.2016 DE 102016217241
(43) Veröffentlichungstag der Anmeldung: 14.03.2018
(73) Patentinhaber: Fraunhofer-Gesellschaft zur Förderung der angewandten Forschung e.V., 80686 München (DE); Technische Universität Chemnitz, 09111 Chemnitz (DE)
(72) Erfinder: Morschhauser, Andreas, 09120 Chemnitz (DE); Stiehl, Cornelia, 09113 Chemnitz (DE); Nestler, Jörg, 09112 Chemnitz (DE); Otto, Thomas, 09249 Taura (DE)
(74) Vertreter: Pfenning, Meinig & Partner mbB

(56) Entgegenhaltungen:
- WO-A2-2005/111435
- GB-A- 2 467 298
- US-A1- 2005 247 356
- US-A1- 2006 180 223

## Beschreibung

Die Erfindung liegt auf dem Gebiet der Mechanik und der Fügetechnik und ist mit besonderem Vorteil im Bereich der Mikrofluidik, jedoch auch in anderen Bereichen verwendbar.

Eine der verbreitetsten Fügetechniken zur Verbindung verschiedener Bauteile besteht in der Verklebung mittels eines Klebstoffs. Dabei stellt eine besondere Herausforderung dar, lösbare Klebverbindungen zu schaffen, die ohne größeren Aufwand, und insbesondere ohne die verbundenen Bauteile zu beschädigen, wieder lösbar sind.

Oft wird bei einer lösbaren Klebverbindung eine Materialkomponente verwendet, die thermisch oder durch Strahlung, insbesondere UV-Strahlung, inaktiviert werden kann. Beispielsweise kann ein Klebstoff durch Temperatureinwirkung verflüssigt werden, um eine Klebeverbindung aufzulösen. Ein Klebstoff kann auch durch Einwirkung von UV-Strahlung versprödet werden, um eine Klebeverbindung aufzulösen.

Es kann auch bei einigen Klebstoffen durch Erwärmung das Quellen oder Expandieren bestimmter Bestandteile des Klebers und hierdurch mittelbar das Lösen der Klebeverbindung erreicht werden.

Mittels Klebens können auch Öffnungen verschlossen werden, so dass Ventilanordnung durch Verkleben geschlossen und durch Lösen des Klebers wieder geöffnet werden können.

Derartige Lösungen sind auch aus der Patentliteratur bekannt. Beispielsweise offenbart die US 2006/180223 A Klebefolien, die unter Wärmeeinwirkung lösbar sind.

Aus der US 2007/264628 A ist die Verwendung eines verflüssigbaren Wachses zur Schaffung einer Klebeverbindung bekannt.

Die WO 2005/111435 A2 befasst sich mit einer Anordnung zur Steuerung von Fluidbewegungen in einem System von Kanälen mit Mitteln der Mikrofluidik.

Aus der US 2005/247356 A1 ist für mikrofluidische Anwendungen ein Ventil für die Einmalverwendung beschrieben.

Nachteile der bekannten lösbaren Klebeverbindungen sind oft die Stoffauswahl der verwendeten Klebstoffe, die sie beispielsweise für den biomedizinischen oder analytischen Bereich unanwendbar machen. Durch Wärmeeinwirkung lösbare Klebstoffe können beispielsweise quellen, was sie zum Verschluss von Ventilanordnungen ungeeignet macht, oder der verflüssigte Klebstoff kann durch unkontrolliertes Abfließen Kanäle verschließen, so dass beim Lösen der Klebeverbindung mit dem verflüssigten Klebstoff Probleme entstehen.

Der vorliegenden Erfindung liegt vor dem Hintergrund des Standes der Technik die Aufgabe zugrunde, ein Klebeelement zu schaffen, das leicht zu verkleben und dessen Verklebung leicht und problemlos zu lösen ist.

Die Aufgabe wird mit den Merkmalen der Erfindung gemäß Patentanspruch 1 gelöst. Die Patentansprüche 2 bis 13 zeigen mögliche Ausgestaltungen.

Der Patentanspruch 14 bezieht sich auf eine Ventilanordnung, bei der ein erfindungsgemäßes Klebeelement genutzt wird.

Demgemäß bezieht sich die Erfindung auf ein Klebeelement zum Verkleben an wenigstens einer Bauteilfläche, mit wenigstens einer ersten Trägerschicht, die zumindest auf einer ersten Außenseite in einem ersten Klebebereich eine Schicht eines ersten Klebermaterials trägt und die für das erste Klebermaterial durchlässig ist, und mit wenigstens einer mit der ersten Trägerschicht verbundenen Absorptionsschicht, wobei das erste Klebermaterial und die erste Trägerschicht derart aufeinander abgestimmt sind, dass das erste Klebermaterial, wenn es in flüssiger Form vorliegt, durch Kapillarwirkung in die erste Trägerschicht zumindest teilweise eingesogen wird, und wobei die Absorptionsschicht derart gestaltet ist, dass sie aufgrund der Kapillarwirkung von dem flüssigen ersten Klebermaterial stärker benetzt wird als die erste Trägerschicht.

Mittels des ersten Klebermaterials kann die erste Trägerschicht an einer Bauteilfläche verklebt werden. Wenigstens in dem ersten Klebebereich ist eine Oberfläche der ersten Trägerschicht mit dem Klebermaterial beschichtet, so dass der erste Klebebereich zur Verbindung mit der Bauteilfläche zur Verfügung steht. Damit kann beispielsweise eine Öffnung in der Bauteilfläche, beispielsweise ein Kanal, durch Aufkleben der ersten Trägerschicht verschlossen werden.

Wird das erste Klebermaterial verflüssigt, so benetzt es die poröse erste Trägerschicht und wird durch Kapillarwirkung in diese hineingezogen. Die Trägerschicht kann dabei durch ein festes und steifes Material oder auch durch eine biegeschlaffe Schicht gebildet sein.

Dadurch, dass das verflüssigte erste Klebermaterial die Trägerschicht benetzt, kann es bis zu der Absorptionsschicht gelangen und von dort aufgesogen werden, wobei im Kontaktbereich der Absorptionsschicht mit der ersten Trägerschicht das verflüssigte Klebermaterial von der Absorptionsschicht stärker aufgesogen wird als von der Trägerschicht, so dass das Klebermaterial von der Trägerschicht in die Absorptionsschicht und damit von dem ersten Klebebereich weg gefördert wird. Dies bedeutet, dass durch Verflüssigung des Klebermaterials dieses vom ersten Klebebereich weg gefördert wird, so dass die Klebeverbindung weitgehend rückstandsfrei gelöst werden kann.

Die Verflüssigung des ersten Klebermaterials kann dabei beispielsweise durch eine Temperaturerhöhung erfolgen, jedoch auch durch Änderung anderer physikalischer Parameter, wie beispielsweise durch das Anlegen einer elektrischen Spannung oder eines Magnetfeldes zur Änderung der Viskosität, durch die Einwirkung von Ultraschall oder durch das Einwirken einer UV-Strahlung oder einer anderen Strahlungsform.

Die Erfindung kann auch dadurch verwirklicht werden, dass das Klebeelement zusätzlich zu der ersten Trägerschicht eine zweite Trägerschicht aufweist, die auf einer Außenseite in einem zweiten Klebebereich eine Schicht eines zweiten Klebermaterials aufweist, wobei die zweite Trägerschicht für das zweite Klebermaterial durchlässig ist, derart, dass das zweite Klebermaterial, wenn es in flüssiger Form vorliegt, durch Kapillarwirkung in die zweite Trägerschicht zumindest teilweise eingesogen wird, wobei mit der zweiten Trägerschicht eine Absorptionsschicht verbunden ist, die von dem zweiten Klebermaterial in verflüssigter Form stärker benetzt wird als die zweite Trägerschicht.

Die erste und/oder die zweite Trägerschicht kann, ebenso wie die Absorptionsschicht oder mehrere Absorptionsschichten, porös ausgestaltet sein oder einem porösen Werkstoff bestehen, wobei die Poren wenigstens teilweise offen sind. Dies kann beispielsweise durch die Verwendung aufgeschäumter, offenporiger Werkstoffe erreicht sein. Anstelle von blasenartigen Hohlräumen, wie bei einem aufgeschäumten Werkstoff, können auch zur Erzielung einer Kapillarwirkung Kanäle (Kapillarkanäle) im Werkstoff einer oder mehrerer der genannten Schichten vorgesehen sein. Diese Kanäle können bei der Herstellung der Werkstoffe erzeugt oder auch später eingebracht oder geöffnet werden.

Eine oder mehrere der Schichten können beispielsweise auch durch Sintern hergestellt sein. Wichtig ist in diesem Zusammenhang, dass in der jeweiligen Schicht ein oder mehrere Hohlräume erzeugt werden, die mit einer Schichtoberfläche und insbesondere auch wenigstens teilweise miteinander kommunizieren.

Der Werkstoff, aus dem die Trägerschicht besteht oder die Trägerschichten und/oder Absorptionsschicht(en) bestehen, sollte jedenfalls ein selbsttragendes Gerüst bilden, und vorzugsweise auch dann, wenn er verflüssigten Klebstoff aufnimmt, sollten die Schichten ihr Volumen / ihre Dicke nicht ändern.

Die einzelnen Schichten, Trägerschichten wie auch Absorptionsschichten, können somit vorteilhaft jeweils eine schwammartige Struktur aufweisen, ein selbsttragendes Gerüst bilden und auch bei der Aufnahme von Klebstoff volumenkonstant sein.

Einzelne, mehrere oder alle Trägerschichten und/oder Absorptionsschichten können auch aus einem Vliesmaterial und/oder aus einem saugfähigen Gewebe, beispielsweise einem im wesentlichen aus Faserabschnitten bestehenden oder Faserabschnitte enthaltenden Material, beispielsweise Papier bestehen oder ein solches Material enthalten.

Damit ist ein Klebeelement gebildet, das mehrere Klebebereiche hat, die beispielsweise an unterschiedlichen Seiten, z. B. auch an einander gegenüberliegender Seiten, des Klebeelements angeordnet sein können. In den einzelnen Klebebereichen ist ein Klebermaterial vorgesehen, das verflüssigt werden kann und das dann in die jeweilige Trägerschicht von dem Klebebereich aus eingesogen werden kann. Da beide Trägerschichten mit einem Absorptionsmaterial verbunden sind, kann das Klebermaterial weiter in die Absorptionsschichten eingesogen werden, so dass die Klebebereiche nach dem Lösen des Klebermaterials weitgehend frei von diesem sind.

Für die beiden Klebebereiche kann dasselbe Klebermaterial verwendet werden, jedoch können auch unterschiedliche Klebermaterialien für die verschiedenen Klebebereiche eingesetzt werden. Auch das Material der Trägerschichten kann unterschiedlich sein.

Eine weitere Ausgestaltung der Erfindung sieht vor, dass die zweite Trägerschicht mit derselben Absorptionsschicht verbunden ist wie die erste Trägerschicht. Beispielsweise kann hierzu die Absorptionsschicht auf ihren beiden Seiten mit Trägerschichten verbunden und sandwichartig zwischen diesen angeordnet sein. Die Absorptionsschicht kann dann im Zentrum des Klebeelements liegen und von den verschiedenen Seiten durch die Trägerschichten hindurch das Klebermaterial im flüssigen Zustand aufsaugen.

Eine weitere Ausgestaltung der Erfindung kann somit vorsehen, dass die gemeinsame Absorptionsschicht zwischen der ersten Trägerschicht und der zweiten Trägerschicht angeordnet ist.

Es kann auch vorgesehen sein, dass die zweite Trägerschicht dieselbe Beschaffenheit aufweist wie die erste Trägerschicht, wobei die zweite Trägerschicht insbesondere aus demselben Material besteht wie die erste Trägerschicht. Jedoch kann auch vorgesehen sein, dass die Beschaffenheit der zweiten Trägerschicht von der der ersten Trägerschicht verschieden ist, wobei die zweite Trägerschicht insbesondere aus einem anderen Material besteht als die erste Trägerschicht.

Bei der Verwendung unterschiedlicher Trägerschichten kann das Klebeelement so ausgeführt werden, dass es in verschiedenen Klebebereichen unterschiedliche Hafteigenschaften hat und dass damit das Klebermaterial in den verschiedenen Klebebereichen unterschiedlich wirkt. Auch beim Verflüssigen des Klebermaterials kann dieses in die verschiedenen Trägerschichten unterschiedlich schnell und intensiv eingesogen werden.

Es kann auch beispielsweise vorgesehen sein, dass das zweite Klebermaterial mit dem ersten Klebermaterial identisch ist. Es ist jedoch auch denkbar, dass das zweite Klebermaterial von dem ersten Klebermaterial verschieden ist. In dem erstgenannten Fall kann das Klebermaterial in den verschiedenen Klebebereichen gleichzeitig abgelöst werden, da es denselben physikalischen Bedingungen unterworfen ist und damit an den verschiedenen Stellen des Klebeelements zu etwa derselben Zeit verflüssigt wird. Werden verschiedene Klebermaterialien verwendet, so kann gezielt erst das erste Klebermaterial und unmittelbar danach oder im zeitlichen Abstand später das zweite Klebermaterial verflüssigt und damit die Klebestellen/Klebebereiche gelöst werden. Damit lassen sich verschiedene Klebestellen eines Klebeelements einzeln und unabhängig voneinander lösen. Somit sind lediglich Klebermaterialien mit unterschiedlicher Schmelztemperatur oder mit unterschiedlichen physikalischen Parametern, die zur Verflüssigung führen, auszuwählen.

Es kann auch vorteilhaft vorgesehen sein, dass das Material der mit der zweiten Trägerschicht verbundenen Absorptionsschicht von dem Material der mit der ersten Trägerschicht verbundenen Absorptionsschicht verschieden ist. Es kann aber im Gegensatz dazu auch vorgesehen sein, dass das Material der mit der zweiten Trägerschicht verbundenen Absorptionsschicht mit dem Material der mit der ersten Trägerschicht verbundenen Absorptionsschicht identisch ist.

In einer weiteren Ausgestaltung der Erfindung kann beispielsweise vorgesehen sein, dass wenigstens eine Absorptionsschicht aus demselben Material besteht wie eine mit dieser verbundene Trägerschicht und dass insbesondere die Absorptionsschicht durch einen Beschaffenheitsparameter, insbesondere eine mittlere oder eine kleinste oder eine größte Porengröße, von der Trägerschicht unterschieden ist. Damit ist die Absorptionsschicht der oder wenigstens einer Trägerschicht relativ ähnlich, kann sich von dieser jedoch durch einen Beschaffenheitsparameter unterscheiden, der bewirkt, dass die Absorptionsschicht von dem verflüssigten Klebermaterial stärker benetzt wird als die Trägerschicht. Das Material der Absorptionsschicht kann dabei jedoch identisch mit dem Material der Trägerschicht sein, so dass lediglich ein anderer Beschaffenheitsparameter, wie beispielsweise die Porosität, variieren kann.

Dabei kann beispielsweise auch vorgesehen sein, dass der Beschaffenheitsparameter sich innerhalb der Absorptionsschicht, ausgehend von der Grenze zur Trägerschicht, kontinuierlich oder stufenweise mit steigendem Abstand von der Trägerschicht ändert.

Es kann auch vorteilhaft vorgesehen sein, dass der Wert des Beschaffenheitsparameters in der Absorptionsschicht an der Grenze zur Trägerschicht dem entsprechenden Beschaffenheitsparameter in der Trägerschicht entspricht, so dass dort der Übergang des Beschaffenheitsparameters stetig ist. Damit kann beispielsweise ein Klebeelement mit einer kombinierten Träger- und Absorptionsschicht aufgebaut werden, wobei die Benetzungseigenschaften der Trägerschicht sich mit wachsendem Abstand von dem oder einem Klebebereich dergestalt ändern, dass die Benetzung mit dem verflüssigten Klebermaterial stärker wird bzw. die Kapillarwirkung stärker wird, so dass das verflüssigte Klebermaterial durch einen Material- oder Beschaffenheitsgradienten vom Klebebereich weg durch einige Schichten hindurch in andere Schichten hineingesogen wird, die eine stärkere Tendenz zur Benetzung mit dem Klebermaterial haben. In diesem Fall kann davon gesprochen werden, dass das Trägermaterial stetig oder in diskreten Schritten in das Absorptionsmaterial übergeht.

Die Erfindung kann sich außer auf ein Klebeelement der oben erläuterten Art auch auf eine Ventilanordnung mit einer Öffnung beziehen, die durch ein auf den Rand der Öffnung geklebtes Klebeelement der oben erläuterten Art verschlossen oder verschließbar ist. Ein so gebildetes Ventil weist eine Öffnung auf, die durch ein Klebeelement verschließbar und später entsiegelbar ist.-Das verflüssigte Klebermaterial wird dabei von der Oberfläche des zu verklebenden Bauteils beim Verflüssigen jeweils weitestgehend entfernt, so dass Öffnungen an dem Bauteil nicht durch Klebermaterialrückstände verschlossen werden.

Im Folgenden wird die Erfindung anhand von Ausführungsbeispielen in Figuren einer Zeichnung gezeigt und nachfolgend erläutert. Dabei zeigen
- Fig. 1: ein Klebeelement, das mit einer Bauteilfläche verklebt ist,
- Fig. 2: das Klebeelement aus Figur 1 während des Lösens der Verklebung,
- Fig. 3: das Klebeelement aus den Figuren 1 und 2 nach dem Lösen der Verklebung,
- Fign. 4-5: ein beidseitig mit Bauteilen verklebtes Klebeelement vor und nach dem Lösen der Verklebung,
- Fign. 6 - 8: ein beidseitig mit Bauteilen verklebtes Klebeelement, das gezielt nacheinander von den verschiedenen Bauteilflächen gelöst wird,
- Fign. 9 - 11: ein Klebeelement, das innerhalb eines Fluidkanals mit zwei Bauteilflächen verklebt ist (Figur 9), darauf gelöst wird (Figur 10) und im gelösten Zustand (Figur 11) einen Kanal freigibt, und
- Fign. 12 - 13: ein Klebeelement, das zwischen zwei Bauteilflächen verklebt ist und gemäß der Figur 12 einen Kanal im verklebten Zustand verschließt und diesen im gelösten Zustand (Figur 13) freigibt, wobei das Klebeelement der Figuren 12 und 13 einen anderen Aufbau hat als das in den Figuren 9 - 11 gezeigte Klebeelement.

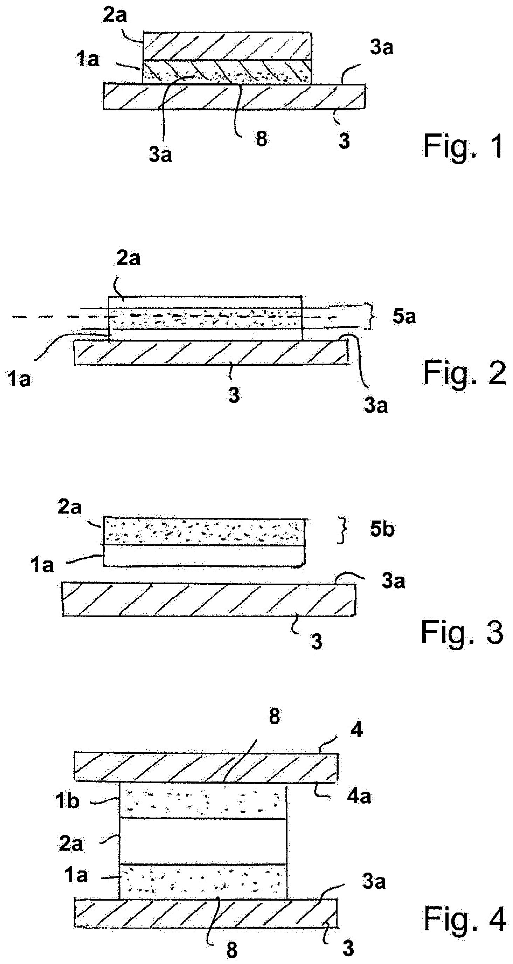

Figur 1 zeigt in einem Querschnitt ein Bauteil 3, an dessen Bauteilfläche 3a ein Klebeelement 1a, 2a in einem Klebebereich 8 verklebt ist. Dabei weist das Klebeelement eine erste Trägerschicht 1a sowie eine mit dieser verbundene Absorptionsschicht 2a auf. Die erste Trägerschicht 1a trägt auf ihrer der Bauteilfläche 3a zugewandten Seite in einem ersten Klebebereich, d. h. wenigstens in einem Teil der Kontaktfläche zwischen der ersten Trägerschicht 1a und dem Bauteil 3, ein Klebermaterial A. Das Klebermaterial A kann teilweise auch in die Trägerschicht 1a eingesogen sein, wie in Figur 1 durch die teilweise gepunktete Schraffur angedeutet ist. Es kann beispielsweise vorgesehen sein, dass die erste Trägerschicht 1a vor dem Verkleben mit dem Bauteil 3 mit dem Klebermaterial bestrichen und dann auf das Bauteil 3 aufgelegt wird. Es kann vorgesehen sein, dass zum Verkleben das Klebermaterial A teilweise verflüssigt wird, beispielsweise durch Wärmeeinwirkung oder durch Änderung eines anderen physikalischen Parameters, der auf das Klebermaterial A die Wirkung hat, dieses reversibel zu verflüssigen.

In dem verfestigten Zustand des Klebermaterials A ist das Klebeelement 1a, 2a mit der Bauteilfläche 3a fest verbunden.

Das erste Klebermaterial A, das Material C der ersten Trägerschicht und die Beschaffenheit der ersten Trägerschicht 1a sind derart aufeinander abgestimmt, dass das Klebermaterial A die Trägerschicht 1a gut benetzt und beispielsweise teilweise in diese einzieht bzw. eingesogen wird. Dazu kann die erste Trägerschicht 1a beispielsweise offenporig porös gestaltet oder mit feinen Kanälen durchsetzt sein. Durch die Kapillarwirkung kann dann das erste Klebermaterial A in die Trägerschicht 1a eingesogen werden.

Auf der der Bauteilfläche 3a abgewandten Seite der ersten Trägerschicht 1a ist eine Absorptionsschicht 2a vorgesehen und mit der ersten Trägerschicht 1a wenigstens teilweise in unmittelbarem Kontakt. Die Absorptionsschicht 2a, ihr Material D und die Beschaffenheit der Absorptionsschicht, beispielsweise die Porosität, sind derart ausgestaltet, dass die Benetzbarkeit der Absorptionsschicht 2a größer ist als die Benetzbarkeit der ersten Trägerschicht 1a. Auf diese Weise wird, sobald das Klebermaterial A verflüssigt wird, dieses praktisch vollständig in die Trägerschicht 1a hineingesogen und von dort weiter in die Absorptionsschicht 2a hineintransportiert.

Dies ist im Detail in Figur 2 im Querschnitt dargestellt, wo das erste Klebermaterial A sich von der Bauteiloberfläche 3a und aus dem ersten Klebebereich 8 wegbewegt hat und sich teilweise in der Absorptionsschicht 2a, teilweise noch in der Trägerschicht 1a in dem mit 5a bezeichneten Bereich befindet. Figur 2 stellt einen Übergangszustand dar, da das Klebermaterial A durch die gute Benetzbarkeit der Absorptionsschicht 2a am Ende in diese praktisch vollständig hineingesogen wird, wie aus Figur 3 ersichtlich ist. Dort ist das Klebermaterial A im Bereich 5b praktisch vollständig in der Absorptionsschicht 2a befindlich. Demgemäß hat sich das Klebermaterial praktisch vollständig aus der ersten Trägerschicht 1a zurückgezogen, und ebenso aus dem Bereich zwischen der Trägerschicht 1a und der Bauteiloberfläche 3a (dem ersten Klebebereich), so dass die Klebeverbindung zwischen der Bauteiloberfläche 3a und der Trägerschicht 1a im Wesentlichen aufgelöst ist. Dies ist in Figur 3 durch den Spalt zwischen der Trägerschicht 1a und der Bauteilfläche 3a dargestellt.

Durch Verflüssigung des Klebermaterials A kann somit das Klebeelement 1a, 2a von der Bauteilfläche 3a praktisch ohne Rückstand von Klebermaterial entfernt werden. Es können für die Verflüssigung des Klebermaterials A alle sinnvollen physikalischen Parameteränderungen gewählt werden, wobei für die meisten Stoffe die Verflüssigung durch Wärmezufuhr am einfachsten möglich ist. Es kann jedoch auch bei geeigneter Materialwahl durch Einfluss von magnetischen und elektrischen Feldern die Viskosität eines flüssigen Klebstoffs A wunschgemäß beeinflusst werden.

In den Figuren 1 bis 3 ist, ebenso wie in den folgenden Figuren, die Absorptionsschicht 2a von der ersten Trägerschicht 1a getrennt dargestellt. Die Trägerschicht kann jeweils aus einem ersten Material C bestehen, während die Absorptionsschicht aus einem zweiten Material D besteht. Die beiden Materialien C und D können jedoch auch identisch sein, wobei lediglich die Beschaffenheit, beispielsweise die Porosität, in der ersten Trägerschicht und der Absorptionsschicht unterschiedlich gewählt ist. Maßgeblich ist, dass die Benetzbarkeit der Absorptionsschicht mit dem Klebermaterial A größer ist als oder gleich groß wie die Benetzbarkeit der Trägerschicht 1a. Die Benetzbarkeit kann praktisch durch den sogenannten Spreitparameter beschrieben werden. Dieser beschreibt die Differenz zwischen der Oberflächenspannung des Substrats, der Oberflächenspannung der Flüssigkeit, d. h. des verflüssigten Klebermaterials, und der Grenzflächenspannung zwischen dem Substrat und dem verflüssigten Kleber. Der Spreitfaktor sollte somit für die Absorptionsschicht in Verbindung mit dem verflüssigten Klebermaterial A größer sein als für die Trägerschicht in Zusammenhang mit dem verflüssigten Klebermaterial. Für diesen Fall wird im Rahmen der vorliegenden Anmeldung von einer größeren oder besseren Benetzbarkeit der Absorptionsschicht mit dem Klebermaterial A gesprochen.

Figur 4 zeigt ein doppelseitig mit Bauteilflächen 3a, 4a der Bauteile 3, 4 verklebtes Klebeelement 1a, 2a, 1b. Dabei besteht das Klebeelement aus einer ersten Trägerschicht 1a, die dem Bauteil 3 zugewandt ist und mit der Bauteilfläche 3a verklebt ist, einer zweiten Trägerschicht 1b, die dem zweiten Bauteil 4 zugewandt und mit der Bauteilfläche 4a verklebt ist, sowie einer zwischen den Trägerschichten 1a, 1b angeordneten Absorptionsschicht 2a. Die Absorptionsschicht 2a weist eine bessere Benetzbarkeit mit dem Klebermaterial A auf als die Trägerschichten 1a, 1b.

In Figur 4 ist dargestellt, dass die Trägerschichten 1a, 1b teilweise mit dem Klebermaterial A durchsetzt/benetzt sind. Das Klebermaterial A befindet sich zudem zumindest im ersten Klebebereich 8 zwischen der ersten Trägerschicht 1a und der Bauteilfläche 3a und im zweiten Klebebereich 9 zwischen der zweiten Trägerschicht 1b und der Bauteilfläche 4a.

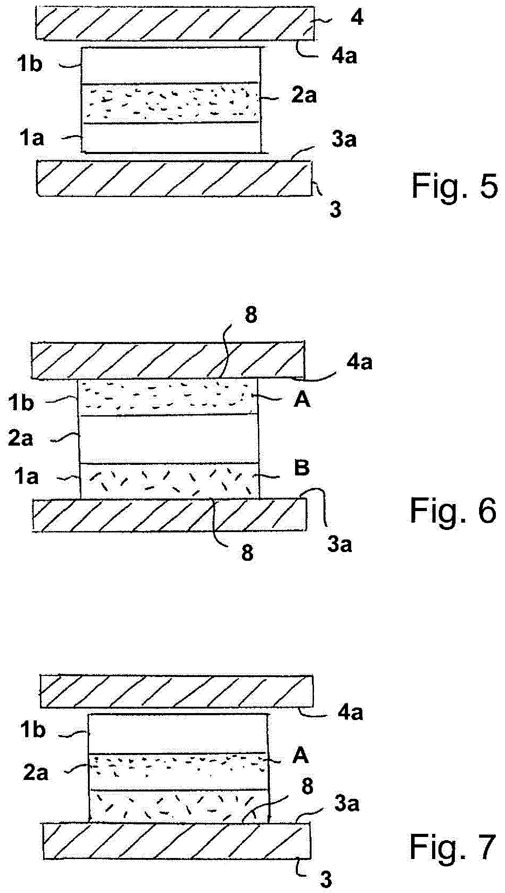

In Figur 5 ist der Zustand nach der vollständigen Verflüssigung des Klebermaterials A und dem Lösen der Klebeverbindungen zu den Bauteilen 3 und 4 gezeigt. Die Trägerschichten 1a, 1b sind weitgehend frei von dem Klebermaterial A, das in der Absorptionsschicht 2a aufgesogen ist. Zwischen den Trägerschichten 1a, 1b und den diesen zugewandten Bauteilflächen 3a, 4a ist aus dem ersten und dem zweiten Klebebereich das Klebermaterial A entfernt, und die Klebeverbindungen sind gelöst.

In den Figuren 6, 7, 8 ist eine Konstellation mit zwei verschiedenen Klebermaterialien A, B gezeigt. In Figur 6 ist dargestellt, dass das Klebeelement, bestehend aus der ersten Trägerschicht 1a, der zweiten Trägerschicht 1b und der zwischen diesen liegenden Absorptionsschicht 2a, im Bereich der ersten Trägerschicht 1a mit einem Klebermaterial B benetzt ist, während die zweite Trägerschicht 1b mit dem Klebermaterial A benetzt ist. Entsprechend ist die erste Trägerschicht 1a mit der Bauteilfläche 3a mittels des Klebermaterials B verklebt, während die zweite Trägerschicht 1b mit der Bauteilfläche 4a mittels des Klebermaterials A verklebt ist.

Die Klebermaterialien A, B können insbesondere bei unterschiedlichen Temperaturen in den flüssigen Zustand übergehen. Auf diese Weise ist es möglich, durch Steuerung der Temperatur zunächst ein erstes Klebermaterial, beispielsweise das Klebermaterial A, zu verflüssigen, während das Klebermaterial B noch fest bleibt. Dieses Beispiel ist in Figur 7 gezeigt, wo dargestellt ist, dass das Klebermaterial A sich verflüssigt hat und in der Absorptionsschicht 2a aufgesogen worden ist. Die zweite Trägerschicht 1b ist somit frei von Klebermaterial, und die Verklebung zwischen der zweiten Trägerschicht 1b und der Bauteilfläche 4a ist gelöst. Das Klebeelement 1a, 1b, 2a ist in diesem Zustand noch mit dem Bauteil 3 an der Bauteilfläche 3a verklebt.

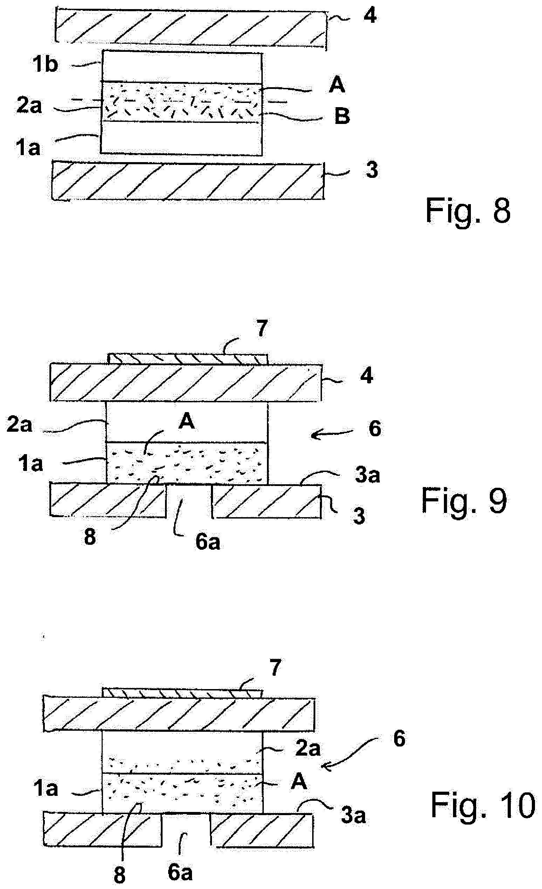

In Figur 8 ist der Zustand nach einer weiteren Temperaturerhöhung dargestellt, bei der auch das Klebermaterial B verflüssigt worden ist. Es ist dargestellt, dass beide Klebermaterialien A und B in der Absorptionsschicht 2a aufgesogen worden sind, wobei das Klebermaterial B eher im unteren Bereich der Absorptionsschicht 2a befindlich ist, der dem Bauteil 3 zugewandt ist, während das Klebermaterial A eher in dem dem Bauteil 4 zugewandten Bereich der Absorptionsschicht gesammelt ist. Die beiden Trägerschichten 1a, 1b sind praktisch frei von Klebermaterial A, B, ebenso wie die Klebebereiche zwischen dem Klebeelement 1a, 1b, 2a und den Bauteilen 3, 4. In diesem Zustand sind beide Klebeverbindungen des Klebeelements 1a, 1b, 2a mit den Bauteilen 3 und 4 gelöst.

Das Klebeelement 1a, 1b, 2a kann auch in diesem Fall entweder als Schichtung dreier unterschiedlicher Stoffe oder gleicher Stoffe mit unterschiedlicher Beschaffenheit gestaltet sein, wobei die Trägerschichten 1a, 1b beispielsweise aus demselben Material hergestellt sein und mit der gleichen Beschaffenheit versehen sein können. Material und/oder Beschaffenheit der Trägerschichten 1a, 1b können jedoch auch unterschiedlich sein. Das Material der Absorptionsschicht 2a kann sich von dem Material einer oder beider Trägerschichten 1a, 1b unterscheiden, jedoch kann auch das Material der Absorptionsschicht 2a identisch mit wenigstens dem einer der Trägerschichten 1a, 1b sein. In diesem Fall muss sich die Beschaffenheit, beispielsweise die Porosität, der Absorptionsschicht 2a von derjenigen der Trägerschichten 1a, 1b unterscheiden.

Es kann auch vorgesehen sein, dass durch Materialmischung ein allmählicher Übergang zwischen der Trägerschicht 1a, der Absorptionsschicht 2a und der Trägerschicht 1b gebildet ist. Dies kann durch entsprechende Herstellungsverfahren und Mischung der Herstellungsmaterialien geschehen, oder es können lediglich die Beschaffenheiten der verschiedenen Schichten unterschiedlich sein und durch eine stetige Parameteränderung ineinander übergehen. Beispielsweise kann sich ein stetiger Übergang der Porosität von der ersten Trägerschicht 1a bis in die Mitte der Absorptionsschicht 2a und von dort zur zweiten Trägerschicht 1b ergeben. Diese Möglichkeit der stetigen Übergänge von Beschaffenheiten und/oder Materialmischungen zwischen den verschiedenen Schichten ist für alle Ausführungsbeispiele gegeben.

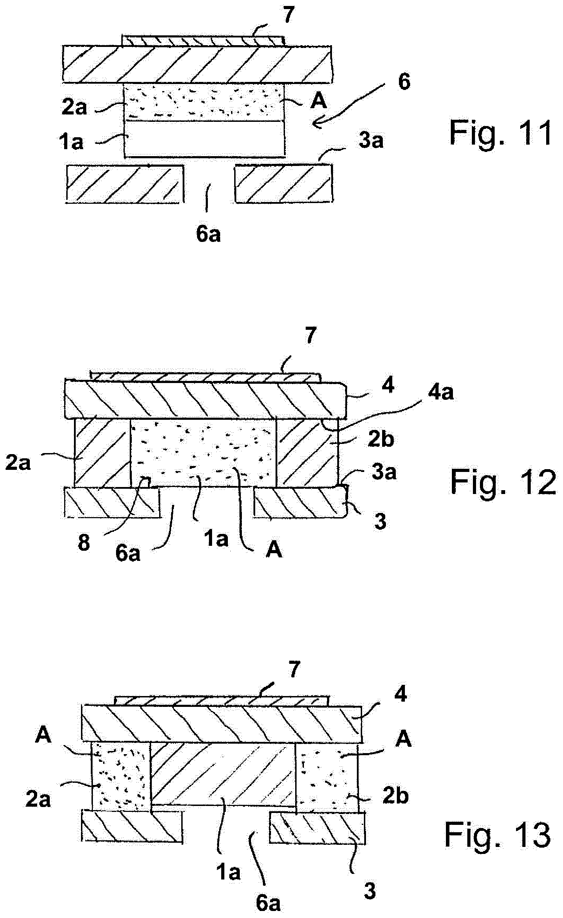

Figur 9 zeigt, ebenso wie die Figuren 10 und 11 eine Ventilanordnung unter Verwendung eines Klebeelements, wobei das Klebeelement wie in den Figuren 1 bis 3 aus einer ersten Trägerschicht 1a und einer Absorptionsschicht 2a besteht. Zwischen den Bauteilen 3 und 4 ist ein Kanal 6 gebildet, wobei eine Kanalöffnung 6a vorgesehen ist. Durch das Verkleben des Klebeelementes 1a, 2a mit der Bauteilfläche 3a ist die Kanalöffnung 6a verschlossen. Die Kanalöffnung 6a kann beispielsweise durch eine Bohrung in dem Bauteil 3 gegeben sein.

Die Verklebung des Klebeelementes 1a, 2a mit dem Rand der Kanalöffnung 6a auf der Bauteilfläche 3a ergibt eine Dichtung.

Die Trägerschicht 1a des Klebeelements ist mittels eines Klebermaterials A mit der Bauteilfläche 3a verbunden, wobei das Klebermaterial beispielsweise wenigstens teilweise, wie durch die Punkte in der Querschnittsdarstellung angedeutet, in der Trägerschicht 1a aufgesogen ist.

Die Ventilanordnung weist einen Aktuator 7 auf, der eine Verflüssigung des Klebermaterials bewirkt und der beispielsweise als Heizelement auf dem Bauteil 4 montiert sein kann. Wird mittels des Aktuators 7 die Temperatur derart erhöht, dass das Klebermaterial A sich verflüssigt, so wird, wie in Figur 10 dargestellt, das Klebermaterial A in die Absorptionsschicht 2a hineingesogen und bewegt sich innerhalb der Trägerschicht 1a von der Bauteilfläche 3a weg. Nach einer gewissen Zeit ist, wie in Figur 11 dargestellt, das Klebermaterial A vollständig oder fast vollständig in der Absorptionsschicht 2a aufgenommen, so dass die erste Trägerschicht 1a praktisch frei von Klebermaterial ist, ebenso wie der Klebebereich zwischen der Trägerschicht 1a und der Bauteilfläche 3a. Dies ist durch einen Spalt zwischen der Trägerschicht 1a und der Bauteilfläche 3a in Figur 11 angedeutet. Hierdurch ist eine Öffnung im Randbereich der Kanalöffnung 6a geschaffen, so dass die Kanalöffnung 6a mit dem Kanal 6 kommunizieren kann. Die Ventilanordnung ist damit geöffnet. Die Temperatur kann wieder abgesenkt werden, so dass das Klebermaterial A in der Absorptionsschicht 2a verbleibt und sich dort beispielsweise verfestigt.

Die Figuren 12 und 13 zeigen eine andere Ausgestaltung einer Ventilanordnung zwischen einem Bauteil 3 und einem Bauteil 4, wobei die Trägerschicht 1a diesmal von zwei Absorptionsschichten 2a, 2b seitlich umgeben ist. Sowohl die Trägerschicht 1a als auch die Absorptionsschichten 2a, 2b erstrecken sich vollständig zwischen dem ersten Bauteil 3 und dem zweiten Bauteil 4 und füllen den Abstand zwischen der Bauteilfläche 3a und der Bauteilfläche 4a aus. Die Trägerschicht 1a ist wenigstens teilweise mit dem Klebermaterial A benetzt, zumindest an seiner Außenseite im Klebebereich zwischen der Trägerschicht 1a und der Bauteilfläche 3a, insbesondere im Bereich des Randes der Öffnung 6a an dem Bauteil 3. Damit ist die Trägerschicht 1a mittels des Klebermaterials A mit dem Rand der Kanalöffnung 6a verklebt und verschließt die Kanalöffnung 6a. Es ist auch in diesem Fall ein Kanal zwischen den Bauteilen 3 und 4 vorgesehen, der von der Kanalöffnung 6a durch die Ventilanordnung trennbar und durch Lösen des Klebeelements mit der Kanalöffnung 6a verbindbar ist.

Auch im Beispiel der Figur 12 ist ein Aktuator 7 vorgesehen, der eine Temperaturerhöhung des Klebeelementes 1a, 2a, 2b bewirken kann.

Wird der Aktuator betätigt und das Klebermaterial A verflüssigt, so wird es in die erste Trägerschicht 1a und weiter in die Absorptionsschichten 2a, 2b gezogen. Die Absorptionsschichten 2a, 2b können dabei aus dem gleichen Material, jedoch auch aus unterschiedlichen Materialien bestehen und in beiden Fällen gleiche oder ähnliche Beschaffenheit, jedoch auch unterschiedliche Beschaffenheit aufweisen.

Ist, wie in Figur 13 dargestellt, das Klebermaterial A im Wesentlichen in einer oder beiden der Absorptionsschichten aufgesogen, so ist die Trägerschicht 1a weitgehend frei von dem Klebermaterial, ebenso wie der Bereich zwischen der ersten Trägerschicht 1a und dem Randbereich der Kanalöffnung 6a an dem Bauteil 3. Dies ist durch einen Spalt zwischen der Trägerschicht 1a und dem Bauteil 3 im Bereich des Randes der Öffnung 6a dargestellt. Nun kann beispielsweise ein Fluid von der Kanalöffnung 6a in den Kanal/Bereich zwischen den Bauteilen 3 und 4 strömen, so dass die Ventilanordnung durch Lösen der Verklebung des Klebeelements 1a, 2a, 2b geöffnet ist.

Dadurch, dass das Klebermaterial A praktisch rückstandsfrei durch die erste Trägerschicht 1a hindurch in die Absorptionsschichten 2a, 2b gezogen worden ist, besteht nicht die Gefahr, die Kanalöffnung 6a durch das verflüssigte Klebermaterial A beim Lösen der Klebeverbindung zu verstopfen. Dies ist insbesondere für sehr kleine Kanalöffnungen 6a wichtig, wie beispielsweise bei der Verwendung derartiger Ventilanordnungen im pharmazeutischen Bereich, beispielsweise bei Dosieranordnungen, Dosierpumpen etc., die z. B. auch implantierbar sein können.

## Patentansprüche

1. Klebeelement (1a, 1b, 2a, 2b) zum Verkleben an wenigstens einer Bauteilfläche (3a, 4a), mit wenigstens einer ersten Trägerschicht (1a, 1b), die zumindest auf einer ersten Außenseite in einem ersten Klebebereich (8) eine Schicht eines ersten Klebermaterials (A, B) trägt und die für das erste Klebermaterial durchlässig ist, und mit wenigstens einer mit der ersten Trägerschicht (1a, 1b) verbundenen Absorptionsschicht (2a, 2b), wobei das Klebermaterial und die erste Trägerschicht derart aufeinander abgestimmt sind, dass das erste Klebermaterial (A, B), wenn es in flüssiger Form vorliegt, durch Kapillarwirkung in die erste Trägerschicht (1a, 1b) zumindest teilweise eingesogen wird, und wobei die Absorptionsschicht (2a, 2b) derart gestaltet ist, dass sie aufgrund der Kapillarwirkung von dem flüssigen ersten Klebermaterial stärker benetzt wird als die erste Trägerschicht (1a, 1b).

2. Klebeelement nach Anspruch 1, **dadurch gekennzeichnet, dass** es zusätzlich zu der ersten Trägerschicht (1a) eine zweite Trägerschicht (1b) aufweist, die auf einer Außenseite in einem zweiten Klebebereich (9) eine Schicht eines zweiten Klebermaterials (B) aufweist, wobei die zweite Trägerschicht (1b) für das zweite Klebermaterial (B) durchlässig ist, derart, dass das zweite Klebermaterial, wenn es in flüssiger Form vorliegt, durch Kapillarwirkung in die zweite Trägerschicht (1b) zumindest teilweise eingesogen wird, wobei mit der zweiten Trägerschicht (1b) eine Absorptionsschicht (2a, 2b) verbunden ist, die von dem zweiten Klebermaterial (B) in verflüssigter Form stärker benetzt wird als die zweite Trägerschicht.

3. Klebeelement nach Anspruch 2, **dadurch gekennzeichnet, dass** die zweite Trägerschicht (1b) mit derselben Absorptionsschicht (2a) verbunden ist wie die erste Trägerschicht.

4. Klebeelement nach Anspruch 3, **dadurch gekennzeichnet, dass** die gemeinsame Absorptionsschicht (2a) zwischen der ersten Trägerschicht (1a) und der zweiten Trägerschicht (1b) angeordnet ist.

5. Klebeelement nach Anspruch 2 oder einem der folgenden, **dadurch gekennzeichnet, dass** die zweite Trägerschicht (1b) dieselbe Beschaffenheit aufweist wie die erste Trägerschicht (1a), wobei die zweite Trägerschicht insbesondere aus demselben Material besteht wie die erste Trägerschicht.

6. Klebeelement nach einem der Ansprüche 2 bis 4, **dadurch gekennzeichnet, dass** die Beschaffenheit der zweiten Trägerschicht (1b) von der der ersten Trägerschicht (1a) verschieden ist, wobei die zweite Trägerschicht insbesondere aus einem anderen Material besteht als die erste Trägerschicht.

7. Klebeelement nach Anspruch 2 oder einem der folgenden, **dadurch gekennzeichnet, dass** das zweite Klebematerial (B) mit dem ersten Klebematerial (A) identisch ist.

8. Klebeelement nach einem der Ansprüche 2 bis 6, **dadurch gekennzeichnet, dass** das zweite Klebermaterial (A) von dem ersten Klebermaterial (B) verschieden ist.

9. Klebeelement nach Anspruch 2 oder einem der folgenden, **dadurch gekennzeichnet, dass** das Material der mit der zweiten Trägerschicht (1b) verbundenen Absorptionsschicht (2b) von dem Material der mit der ersten Trägerschicht (1a) verbundenen Absorptionsschicht (2a) verschieden ist.

10. Klebeelement nach einem der Ansprüche 2 bis 9, **dadurch gekennzeichnet, dass** das Material der mit der zweiten Trägerschicht (1b) verbundenen Absorptionsschicht (2b) mit dem Material der mit der ersten Trägerschicht (1a) verbundenen Absorptionsschicht (2a) identisch ist.

11. Klebeelement nach Anspruch 1 oder einem der folgenden, **dadurch gekennzeichnet, dass** wenigstens eine Absorptionsschicht (2a, 2b) aus demselben Material besteht wie eine mit dieser verbundene Trägerschicht (1a, 1b) und dass insbesondere die Absorptionsschicht durch einen Beschaffenheitsparameter, insbesondere eine mittlere Porengröße, von der Trägerschicht unterschieden ist.

12. Klebeelement nach Anspruch 11, **dadurch gekennzeichnet, dass** der Beschaffenheitsparameter sich innerhalb der Absorptionsschicht (2a, 2b), ausgehend von der Grenze zur Trägerschicht (1a, 1b), kontinuierlich oder stufenweise mit steigendem Abstand von der Trägerschicht ändert.

13. Klebeelement nach Anspruch 12, **dadurch gekennzeichnet, dass** der Wert des Beschaffenheitsparameters in der Absorptionsschicht (2a, 2b) an der Grenze zur Trägerschicht (1a, 1b) dem entsprechenden Beschaffenheitsparameter in der Trägerschicht entspricht, so dass dort der Übergang des Beschaffenheitsparameters stetig ist.

14. Ventilanordnung mit mindestens einer Kanalöffnung (6a), die durch ein auf den Rand der Kanalöffnung geklebtes Klebeelement (1a, 1b, 2a, 2b) nach einem der Patentansprüche 1 bis 13 verschlossen ist.

## Claims

1. An adhesive element (1a, 1b, 2a, 2b) for bonding to at least one component surface (3a, 4a), comprising at least one first carrier layer (1a, 1b), which carries a layer of a first adhesive material (A, B) at least on a first outer side in a first adhesive region (8) and allows the first adhesive material to pass, and comprising at least one absorption layer (2a, 2b) joined to the first carrier layer (1a, 1b), the adhesive material and the first carrier layer being matched to one another in such a way that the first adhesive material (A, B), when present in liquid form, is at least partially taken up into the first carrier layer (1a, 1b) by capillary action, and the absorption layer (2a, 2b) being configured so as to be wetted more strongly by the liquid first adhesive material than the first carrier layer (1a, 1b) as a result of the capillary action.

2. The adhesive element according to claim 1, **characterized by** comprising, in addition to the first carrier layer (1a), a second carrier layer (1b), which comprises a layer of a second adhesive material (B) on an outer side in a second adhesive region (9), the second carrier layer (1b) allowing the second adhesive material (B) to pass in such a way that the second adhesive material, when present in liquid form, is at least partially taken up into the second carrier layer (1b) by capillary action, and an absorption layer (2a, 2b) being joined to the second carrier layer (1b), which is wetted more strongly by the second adhesive material (B) in liquid form than the second carrier layer.

3. The adhesive element according to claim 2, **characterized in that** the second carrier layer (1b) is joined to the same absorption layer (2a) as the first carrier layer.

4. The adhesive element according to claim 3, **characterized in that** the shared absorption layer (2a) is arranged between the first carrier layer (1a) and the second carrier layer (1b).

5. The adhesive element according to claim 2 or any one that follows, **characterized in that** the second carrier layer (1b) has the same structure as the first carrier layer (1a), the second carrier layer being, in particular, made of the same material as the first carrier layer.

6. An adhesive element according to any one of claims 2 to 4, **characterized in that** the structure of the second carrier layer (1b) is different from that of the first carrier layer (1a), the second carrier layer being, in particular, made of a different material than the first carrier layer.

7. The adhesive element according to claim 2 or any one that follows, **characterized in that** the second adhesive material (B) is identical to the first adhesive material (A).

8. An adhesive element according to any one of claims 2 to 6, **characterized in that** the second adhesive material (A) is different from the first adhesive material (B).

9. The adhesive element according to claim 2 or any one that follows, **characterized in that** the material of the absorption layer (2b) joined to the second carrier layer (1b) is different from the material of the absorption layer (2a) joined to the first carrier layer (1a).

10. An adhesive element according to any one of claims 2 to 9, **characterized in that** the material of the absorption layer (2b) joined to the second carrier layer (1b) is identical to the material of the absorption layer (2a) joined to the first carrier layer (1a).

11. The adhesive element according to claim 1 or any one that follows, **characterized in that** at least one absorption layer (2a, 2b) is made of the same material as a carrier layer (1a, 1b) joined thereto and, in particular, the absorption layer is different from the carrier layer by a structure parameter, in particular a mean pore size.

12. The adhesive element according to claim 11, **characterized in that** the structure parameter within the absorption layer (2a, 2b), proceeding from the boundary to the carrier layer (1a, 1b), changes continuously or incrementally with increasing distance from the carrier layer.

13. The adhesive element according to claim 12, **characterized in that** the value of the structure parameter in the absorption layer (2a, 2b), at the boundary to the carrier layer (1a, 1b), corresponds to the relevant structure parameter in the carrier layer, so that the transition of the structure parameter is continuous there.

14. A valve assembly, comprising at least one channel opening (6a), which is closed by an adhesive element (1a, 1b, 2a, 2b) according to any one of claims 1 to 13 which is adhesively bonded to the edge of the channel opening.

## Revendications

1. Elément adhésif (1a, 1b, 2a, 2b) destiné à être collé sur au moins une surface de composant (3a, 4a), doté d'au moins une première couche de support (1a, 1b), qui porte au moins une couche d'un premier matériau adhésif (A, B) sur une première face avant dans une première zone adhésive (8) et qui est perméable au premier matériau adhésif, et doté d'au moins une couche d'absorption (2a, 2b) reliée avec la première couche de support (1a, 1b), où le matériau adhésif et la première couche support sont coordonnés l'un vis-à-vis de l'autre de telle manière que le premier matériau adhésif (A, B), lorsqu'il est présent sous forme liquide, est aspiré au moins partiellement par capillarité dans la première couche support (1a, 1b), et où la couche d'absorption (2a, 2b) est conçue de telle manière, qu'en raison de l'effet capillaire, elle est davantage mouillée par le premier matériau adhésif que la première couche support (1a, 1b).

2. Elément adhésif selon la revendication 1, **caractérisé en ce qu'**il présente, en complément de la première couche de support (1a), une deuxième couche support (1b), qui présente sur une face extérieure dans une deuxième zone adhésive (9) une couche d'un deuxième matériau adhésifs (B), où la deuxième couche support (1b) est perméable pour le deuxième matériau adhésif (B) de sorte que le deuxième matériau adhésif, lorsqu'il se présente sous forme liquide, est aspiré au moins partiellement par capillarité dans la deuxième couche support (1b), où une couche d'absorption (2a, 2b) est reliée avec la deuxième couche support (1b), qui est plus fortement mouillée par le deuxième matériau adhésif (B) sous forme liquide que la deuxième couche support.

3. Elément adhésif selon la revendication 2, **caractérisé en ce que** la deuxième couche support (1b) est reliée avec la même couche d'absorption (2a) que la première couche support.

4. Elément adhésif selon la revendication 3, **caractérisé en ce que** la couche d'absorption (2a) commune est disposée entre la première couche de support (1a) et la deuxième couche support (1b).

5. Elément adhésif selon la revendication 2 ou l'une des suivantes, **caractérisé en ce que** la deuxième couche support (1b) présente la même nature que la première couche support (1a), où la deuxième couche support est en particulier constituée du même matériau que la première couche support.

6. Elément adhésif selon l'une des revendications 2 à 4, **caractérisé en ce que** la nature de la deuxième couche support (1b) est différente de celle de la première couche de support (1a), où la deuxième couche support est en particulier constituée d'un autre matériau que la première couche support.

7. Elément adhésif selon la revendication 2 ou de l'une des suivantes, **caractérisé en ce que** le deuxième matériau adhésif (B) est identique au premier matériau adhésif (A).

8. Elément adhésif selon l'une des revendications 2 à 6, **caractérisé en ce que** le deuxième matériau adhésif (A) est différent du premier matériau adhésif (B).

9. Elément adhésif selon la revendication 2 ou de l'une des suivantes, **caractérisé en ce que** le matériau de la couche d'absorption (2b) reliée avec la deuxième couche support (1b) est différent du matériau de la couche d'absorption (2a) reliée à la première couche de support (1a).

10. Elément adhésif selon l'une des revendications 2 à 9, **caractérisé en ce que** le matériau de la couche d'absorption (2b) reliée avec la deuxième couche support (1b) est identique au matériau de la couche d'absorption (2a) reliée à la première couche de support (1a).

11. Elément adhésif selon la revendication 1 ou de l'une des suivantes, **caractérisé en ce qu'**au moins une couche d'absorption (2a, 2b) est constituée du même matériau qu'une couche support (1a, 1b) reliée avec celle-ci et qu'en particulier la couche d'absorption est différente par un paramètre de structure, notamment une taille de pores moyenne, de la couche support.

12. Elément adhésif selon la revendication 11, **caractérisé en ce que** le paramètre de structure se modifie de manière continue ou par étapes avec un écart croissant par rapport à la couche support dans la couche d'absorption (2a, 2b), en partant de la limite de la couche support (1a, 1b).

13. Elément adhésif selon la revendication 12, **caractérisé en ce que** la valeur du paramètre de structure dans la couche d'absorption (2a, 2b) à la limite de la couche support (1a, 1b) correspond au paramètre équivalent dans la couche support, de sorte que la transition du paramètre de structure s'y effectue de manière continue.

14. Système de soupape avec au moins un orifice de canal (6a), qui est fermé par un élément adhésif (1a, 1b, 2a, 2b) selon l'une des revendications 1 à 13 collé sur le bord de l'orifice de canal.
